# EUROPEAN PATENT APPLICATION

(11) **EP 4 491 030 A1**
(43) Date of publication of application: **15.01.2025**
(21) Application number: 23185672.5
(22) Date of filing: 14.07.2023
(51) Int. Cl.: A23J 3/00, A23J 3/14, A23J 3/22, A23L 29/00, A23L 29/20, A23L 33/10

(54) **MEAT ANALOGUE COMPRISING CELLULOSE MICROFIBRILS**

(71) Applicant: Unilever IP Holdings B.V., 3013 AL Rotterdam (NL)
(72) Inventor: The designation of the inventor has not yet been filed
(74) Representative: Tjon, Hon Kong Guno

(57) **Abstract**

The invention relates to a meat analogue comprising a combination of hydrated texturised non-animal protein and a binder, said binder comprising cellulose microfibrils, thermally gelling non-animal protein and water. The invention also provides a method for preparing the meat analogue, said method comprising a high-shear treatment step.

## Description

### Field of the invention

The invention relates to a meat analogue comprising a combination of hydrated texturised non-animal protein and a binder, said binder comprising cellulose microfibrils, thermally gelling non-animal protein and water. The meat analogue of the present invention has a very desirable meat-like texture, firmness and mouthfeel.

The invention also provides a method for preparing the aforementioned meat analogue, said method comprising a high-shear treatment step.

### Background of the Invention

Meat is considered the highest quality protein source, not only due to its nutritional characteristics, but also for its appreciated taste. Meat is nutritious because meat protein contains all essential amino acids for humans. In addition, meat comprises essential vitamins, such as vitamin B12, and is rich in minerals. Meat also contains fat tissue, greatly contributing to food acceptability by imparting specific characteristics such as appearance, texture, and mouthfeel. The fat tissue also contributes to the properties of the meat as it is prepared and cooked.

However, from a health point of view, an excessive intake of meat products cannot be recommended, especially because the fat tissue in meat contains cholesterol and a higher proportion of saturated fats.

Further, due to animal diseases such as mad cow disease, a global shortage of animal protein, growing consumer demand for religious (halal or kosher) food, and economic reasons, there is an increased interest in the consumption of non-meat proteins by consuming meat analogues instead of actual meat products.

Meat analogues are prepared to resemble meat as much as possible in appearance, taste and texture. Meat analogues are typically prepared from proteinaceous fibres of non-animal origin. Proteinaceous fibres, such as non-animal protein, are characterised by having an identifiable structure and structural integrity, such that each unit will withstand hydration, cooking and other procedures used in preparing the fibres for consumption.

A combination of plant derived dietary fibres and vegetable protein is commonly used as a binding agent in meat analogues. However, the texture, firmness and elasticity of such meat analogues still leave much to be desired, as they are often too soft to be further processed. Whereas methylcellulose is an excellent alternative, it is obtained by chemical modification of cellulose, and therefore does not fit the clean label expectation of consumers.

WO 2014/081285A1 describes the combination of hydrated plant dietary fibres with vegetable protein using a low-shear mixer to create a meat analogue via extrusion.

WO2020/089445A1 describes the combination of plant dietary fibres and protein using a low-shear mixer to provide a binding agent with similar functional properties as methylcellulose.

WO2019/048715A2 describes combining expanded pectin-containing biomass and non-thermally gelling protein as a binder in meat analogues to provide a meat-like texture.

Database Technical Disclosure (An IP.com Prior Database Technical Disclosure, IP.com Number: IPCOM000263621D, IP.com Electronic Publication Date: September 18, 2020) shows the use of powder citrus fibre that has been previously homogenised with a low shear mixer and dried to powder as a clean label binder in burgers.

### Summary of the Invention

The inventors have discovered that meat analogues, that provide a highly desirable meaty texture, firmness and mouthfeel, can be achieved by using a binder comprising cellulose microfibrils with a very homogenous distribution and a thermally gelling protein, followed by the addition of pieces of texturised non-animal protein.

A first aspect of the invention relates to a meat analogue comprising:
(a) 25-75 wt.% by weight of the meat analogue of hydrated texturised non-animal protein pieces;
(b) 20-70 wt.% by weight of the meat analogue of a binder, said binder comprising by weight of the binder:
   (b1) 3-35 wt.% of thermally gelling non-animal protein;
   (b2) 0.1-6 wt.% of cellulose microfibrils;
   (b3) 0-20 wt.% of polysaccharide; and
   (b4) 20-95 wt. % water;

wherein component (b1), (b2), (b3) and (b4) of the binder together constitute at least 60 wt.% of the binder and wherein the binder has a composition homogeneity parameter (CHP) of at least 0.05,
wherein components (a) and (b) together constitute at least 75 wt.% of the meat analogue.

The meat analogues of the present invention exhibit various benefits, including improved thermal stability, less stickiness and better fat retention. Furthermore, said meat analogues closely resemble real meat regarding elasticity, mouthfeel and juiciness. Although the inventors do not wish to be bound by theory, it is believed that the ultra-fine dispersion of cellulose microfibrils within the meat analogue binder leads to the previously described benefits.

Accordingly, a second aspect of the invention relates to a method for preparing the aforementioned meat analogue, comprising:
i. providing an aqueous dispersion comprising a source of cellulose microfibrils;
ii. producing a binder by treating the aqueous dispersion with high shear to produce an aqueous dispersion comprising cellulose microfibrils with a composition homogeneity parameter (CHP) of at least 0.05 and by adding thermally gelling non-animal protein to the aqueous dispersion before, during and/or after the high shear treatment; and
iii. combining the binder with texturised non-animal protein pieces to produce a meat analogue dough; and
iv. shaping the meat analogue dough to produce the meat analogue.

The high shear treatment preferably includes one or more steps of high-pressure homogenisation at a pressure between 300-4000 bar.

### Detailed Description of the Invention

The terms "a" and "an" and "the" and similar referents as used herein refer to both the singular and the plural, unless otherwise indicated herein or clearly contradicted by context.

Throughout this specification and the claims which follow, unless the context requires otherwise, the word "comprise" and variations such as "comprises" or "comprising" will be understood to imply the inclusion of a stated integer or step or group of integers or steps but not the exclusion of any other integer or step or group of integers or steps.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Concentrations expressed by weight of dry matter, as mentioned herein, refer to the amount of dry ingredient present in a composition as a percentage of the total amount of dry matter contained in the same composition.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "meat analogue", as used herein, refers to an edible product that does not contain animal meat but is designed to have the flavour, appearance, and mouthfeel of animal meat. Examples include burgers, sausages, nuggets, schnitzels etc. If the meat analogue is coated, such as a nugget or schnitzel, the term "meat analogue" is understood to refer to the whole composition, including any potential coating.

The term "substantially free of" as used herein means that such ingredients are not added as such for a specific functionality but can be present in trace amounts as part of a non-animal derived ingredient.

The term" vegetarian", as used herein, in relation to a product or an ingredient, refers to a product or an ingredient that does not contain animal meat or ingredients that have been derived from animal meat.

The term" vegan", as used herein, in relation to a product or an ingredient, refers to a product or an ingredient that has not been derived from animals. Meat, eggs and dairy products are examples of products that are not vegan.

The term "non-animal protein", as used herein, refers to protein from a non-animal source like a plant protein, a fungal protein, a microbial protein, or an algae protein. It excludes protein from mammals, fish, crustaceans, and birds.

The term "texturised non-animal protein" as used herein refers to proteinaceous material that is produced by cooking an aqueous mixture of water, protein concentrate (optionally protein isolates) and optionally other ingredients in an extruder cooker and extruding the mixture. The extruded material is hydrated and can be used as hydrated non-animal protein without further hydration. After extrusion, the texturised non-animal protein may also be ground or cut into pieces and subsequently dried.

The term "polysaccharide" as used herein refers to all edible polysaccharides excluding cellulose microfibrils.

The term" fat", as used herein, refers to glycerides selected from triglycerides, diglycerides, monoglycerides, phosphoglycerides and combinations thereof. The term "fat" encompasses fats that are liquid at 20 °C and fats that are solid or semi-solid at 20 °C. The melting point of a fat can be determined according to ISO 6321 (2021).

A first aspect of the invention relates to a meat analogue comprising:
(a) 25-75 wt.% by weight of the meat analogue of hydrated texturised non-animal protein pieces;
(b) 20-70 wt.% by weight of the meat analogue of a binder, said binder comprising by weight of the binder:
   (b1) 3-35 wt.% of thermally gelling non-animal protein;
   (b2) 0.1-6 wt.% of cellulose microfibrils;
   (b3) 0-20 wt.% of polysaccharide; and
   (b4) 20-95 wt.% water;

wherein component (b1), (b2), (b3) and (b4) of the binder together constitute at least 60 wt.% of the binder and wherein the binder has a composition homogeneity parameter (CHP) of at least 0.05,
wherein components (a) and (b) together constitute at least 75 wt.% of the meat analogue.

The inventors found that meat analogues with improved texture, firmness and elasticity can be achieved when the cellulose microfibrils have an ultra-fine distribution throughout the composition. The distribution levels are reflected in the composition homogeneity parameter (CHP), the method of determination described below.

Preferably, the CHP of the binder is at least 0.06. Even more preferably, the CHP of the binder is 0.07-0.30. Most preferably, the CHP of the binder is 0.08-0.15.

Similarly, the CHP of the meat analogue is at least 0.05, more preferably 0.06-0.20. Most preferably, the CHP of the meat analogue is 0.08-0.15.

The meat analogue of the present invention preferably is a vegetarian meat analogue. Most preferably, the meat analogue is a vegan meat analogue.

Preferably, the meat analogue, according to the invention, is free from heme-containing protein.

According to the present invention, the meat analogue comprises pieces of hydrated texturised non-animal protein. The meat analogue comprises, by weight of the meat analogue, 25-75 wt.%, preferably 30-70 wt.%, more preferably 35-65 wt.%, most preferably, the meat analogue comprises, by weight of the meat analogue, 40-60 wt.% of hydrated non-animal protein pieces.

A single piece of hydrated non-animal protein, as used in the present invention, preferably has a weight of 20-800 mg, more preferably 50-500 mg.

Furthermore, a piece of hydrated texturised non-animal protein preferably comprises, by weight of said piece, 40-90 wt.% water, more preferably 45-80 wt.% water, most preferably 50-70 wt. % water.

A piece of hydrated texturised non-animal protein preferably comprises, by weight of said piece, 10-60 wt.% of a non-animal protein source, more preferably 25-55 wt.%, most preferably 30-50 wt.% of a non-animal protein source.

The hydrated pieces of texturised non-animal protein that are employed in the present meat analogue preferably comprise, calculated by weight of dry matter, 50-90 wt.%, more preferably 65-88 wt.% and most preferably 70-86 wt.% of non-animal protein.

The non-animal protein in the hydrated texturised non-animal protein is preferably derived from plants, algae, fungi and/or microbes. When plant protein is used, it is preferably selected from legume protein, cereal protein, oilseed protein, tuber protein and combinations thereof. More preferably, the plant protein is selected from legume protein, cereal protein, tuber protein and combinations thereof. Most preferably, the plant protein is selected from legume protein, cereal protein and combinations thereof. Examples of legume protein that may suitably be employed are soy protein, pea protein, lupin protein, mung bean protein, faba bean protein, lentil protein, chickpea protein and combinations thereof. Sunflower protein is an example of an oil seed protein. Gluten is an example of cereal protein that may be comprised in the hydrated pieces of texturised non-animal protein. Potato protein is an example of a tuber protein.

According to the present invention, the meat analogue comprises a binder. Preferably, said binder is present in the meat analogue as a continuous phase to hold together the pieces of hydrated texturised non-animal protein.

The meat analogue comprises 20-70 wt.% by weight of the meat analogue of said binder, more preferably 30-60 wt.%, most preferably 40-50 wt.% of said binder.

The term "thermally gelling non-animal protein", as used herein, refers to a type of protein that can undergo a gelation process when subjected to heat at the concentration, pH and salt level used in the meat analogue. In the case of thermal gelation, a gel network is formed by the proteins upon heating, which is retained upon cooling. The advantage thereof is that the meat analogue gets firmer during cooking, just like real meat, thereby providing the consumer with an even better meat analogue experience. This is, for instance, preferred when the meat analogue is intended as an analogue of raw meat.

Preferably, gelation occurs at a temperature of at least 40 °C, more preferably of at least 45 °C, even more preferably of at least 50 °C, still more preferably of at least 60 °C, yet more preferably of at least 70 °C, most preferably of at least 80 °C. Preferably gelation occurs at a temperature of not more than 100 °C.

Preferably, the thermally gelling non-animal protein is selected from plant protein, fungal protein, microbial protein or combinations thereof. Examples of thermally gelling non-animal protein include legume protein isolates like soy protein isolate, pea protein isolate, mung bean protein isolate, oilseed proteins such as sunflower protein and rapeseed protein, and other plant proteins like potato protein, RuBisCo, mung 8S globulin, pea globulin, pea albumin, lentil protein, zein, oleosin and combinations thereof. Another example of a thermally gelling non-animal protein is a gel-forming *Chlorella* protein.

In a preferred embodiment, the thermally gelling non-animal protein is a thermally gelling plant protein, more preferably the thermally gelling plant protein one or more of legume protein, oil seed protein, potato protein or combinations thereof.

Preferably, the binder comprises, by weight of the binder, 4-32 wt.% of thermally gelling non-animal protein, more preferably 5-30 wt.%, most preferably 6-25 wt.% of thermally gelling non-animal protein.

The term 'cellulose microfibrils" is a term known in the art (e.g. Chinga-Carrasco, Nanoscale Research Letters, 2011, 6:417), and are different from cellulose fibres, such as for example present in wood, which consist of linear assemblies of cellulose microfibrils and have diameter of several micrometers. The cellulose microfibrils are insoluble in water. Cellulose microfibrils are preferably not chemically modified. The cellulose microfibrils are preferably not oxidized.

As known in the art, cellulose microfibrils may be suitably obtained from cell wall material by removing soluble and unbound sugars, protein, oils, waxes and phytochemicals (e.g. carotenoids, lycopene). This is suitably achieved using well known techniques including cutting up the cell wall material, cooking, washing, centrifugation, decanting and drying as is well-known to the skilled person.

The cellulose microfibrils are typically present in the composition in the form of single fibrils or as aggregates with a cross section of a few tens of nanometres to a few micrometres. Cellulose microfibrils are preferably present in aggregates with a cross section of from 3 to 100 nanometer, preferably of from 3 to 50 nanometer.

In a preferred embodiment, the cellulose microfibrils are provided by sources of parenchymal plant tissue (e.g. insoluble dietary fibres, fruit or vegetables), bacteria, algae and combinations thereof. More preferably, the cellulose microfibrils are provided by sources of parenchymal plant tissue. Most preferably, the cellulose microfibrils are provided by sources of parenchymal tissue selected from fruits, roots, bulbs, tubers, seeds, leaves and combinations thereof. Preferred sources of parenchymal tissue include citrus fruit, tomato, peach, pumpkin, kiwi, apple, mango, sugar beet, beetroot, turnip, parsnip, maise, oat, wheat, peas, and combinations thereof. Most preferably, the cellulose microfibrils are provided by sources of citrus fruit, tomato, apple, sugar beet or combination thereof.

Preferably, the sources of cellulose microfibrils are purees, pastes or powders.

Preferably, the binder comprises, by weight of the binder, 0.2-5 wt.% cellulose microfibrils, more preferably 0.4-4 wt.%, most preferably 0.6-3 wt.% cellulose microfibrils.

Cellulose microfibrils have a crystalline structure, the degree of which greatly affects properties such as mechanical strength and water-binding capacity. In particular, the inventors found that an increased water-binding capacity provides the meat analogue with a higher degree of juiciness. The water-binding capacity decreases with an increased degree of crystallinity due to a more tightly packed structure, whereas a lower degree of crystallinity allows for a higher water-binding capacity due to the more open structure. It is therefore preferred that the cellulose microfibrils have an average degree of crystallinity of less than 50%, more preferably less than 35%, most preferably less than 30%. **Error! Reference source not found.** shows the average degree of crystallinity of typical sources of cellulose microfibrils.

| **Source** | **Average degree of crystallinity (%)** |
|---|---|
| Tomato fibres | 32 |
| Citrus fibre (Citrus fibre AQ+N) | 29 |
| Bacterial cellulose (Nata de Coco) | 74 |
| Cotton | 72 |
| Wood pulp fibre (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane fibre (Ultracel) | 49 |

In a preferred embodiment, the cellulose microfibrils and thermally gelling non-animal protein are present in the binder of the present invention in a weight ratio of 1:100 - 2:1, more preferably 1:40 - 1:1.

According to a particularly preferred embodiment, the binder contains thermally gelling non-animal protein, cellulose microfibrils, polysaccharide and water.

In a preferred embodiment of the present invention, the polysaccharide is selected from the group consisting of carob bean gum, tara gum, cassia gum, chitosan, gum arabic, konjac mannan gum, carrageenan, methylcellulose, xanthan gum, pectin, starch, and combinations thereof.

Preferably, the binder comprises, by weight of the binder, 0.5-18 wt.% of polysaccharide. More preferably, the binder comprises, by weight of the binder, 1-15 wt.% of polysaccharide, most preferably 2-12 wt.% of polysaccharide.

The water content of the binder preferably is 25-90 wt.% by weight of the binder, more preferably 40-85 wt.%, most preferably 60-80 wt.% of water by weight of the binder.

The sum of thermally gelling non-animal protein (b1), cellulose microfibrils (b2), polysaccharide (b3) and water (b4) together constitute at least 60 wt.% of the binder, more preferably at least 65 wt.%, most preferably 70-100 wt.% of the binder.

The meat analogue's total water content is preferably in the range of 40-80 wt.%, more preferably in the range of 50-70 wt.%.

The hydrated texturised non-animal protein pieces and binder together constitute at least 75 wt.% of the meat analogue, more preferably at least 80 wt.%, most preferably at least 90 wt.% of the meat analogue.

Examples of optional further ingredients include non-animal fat, fat tissue mimetics, emulsifiers, acidulants, preservatives, colouring, flavouring, vitamins and minerals.

The meat analogue may comprise non-animal fat, preferably in an amount of 0.5-30 wt.%, more preferably 1-25 wt.%, most preferably 2-20 wt.% of non-animal fat calculated by the weight of the meat analogue. Non-animal fat may be present in the hydrated texturised non-animal protein pieces and/or in the binder.

In one embodiment of the invention, the meat analogue comprises no more than a minor amount of fat. In this case, the meat analogue in accordance with this embodiment comprises 0.5-10 wt.%, more preferably 0.1-6 wt.%, most preferably 1.5-4 wt.% of fat.

In another embodiment of the invention, the meat analogue comprises a substantial amount of fat, giving the meat analogue an oily mouthfeel. In accordance with this embodiment, the meat analogue preferably comprises 8-30 wt.%, more preferably 12-28 wt.%, most preferably 16-26 wt. % of fat.

The fat component of the meat analogue preferably has a low content of saturated fatty acids. Preferably, the fat comprises less than 50 wt.%, more preferably less than 35 wt.% and most preferably less than 20 wt.% of saturated fatty acids, calculated by weight of the total amount of fatty acids.

The fat that is present in the meat analogue preferably has an N-value at 20°C of 0-20%, preferably of 0-10%, most preferably of 0 wt.%. The N-value of the fat can suitably be determined by ISO method 8292-2:2008: *Animal and vegetable fats and oils* - *Determination of solid fat content by pulsed NMR* - *Part 2: Indirect method.*

The fat preferably comprises at least 60 wt.%, more preferably at least 80 wt.%, most preferably at least 95 wt.% of an oil that is liquid at 20 °C. Examples of such liquid oils include linseed oil, castor oil, sunflower oil, soybean oil, rapeseed oil, cottonseed oil, safflower oil, flaxseed oil, rice bran oil, olive oil, tung oil, cotton seed oil, peanut oil, algal oil, corn oil, palm fruit oil, palm kernel oil, canola oil, coconut oil, mango oil and mixtures thereof.

The meat analogue preferably does not contain hydrogenated fat.

In an alternative preferred embodiment, the meat analogue comprises fat tissue mimetics as a source of non-animal fat, besides the hydrated texturised non-animal protein pieces and the binder. More preferably the meat analogue comprises 1-20 wt.%, most preferably 2-15 wt.% of fat tissue mimetics, by weight of the meat analogue.

In a preferred embodiment, the meat analogue comprises 0.1-20 wt.%, more preferably 0.5-10 wt.%, most preferably 1-5 wt.% of flavouring agent by weight of the meat analogue. Any food-grade flavouring agent to provide the desired flavour may be used. Examples include beef flavour, pork flavour, meat flavour, fish flavour, taste enhancers, yeast extract, spices, herbs, and combinations thereof.

In another preferred embodiment, the meat analogue comprises 0.01-10 wt.%, more preferably 0.05-5 wt.%, most 0.1-3 wt.% of colouring agent by weight of the meat analogue. Any food-grade colouring agent to provide the desired colour may be used. Preferred are non-animal-derived colouring agents like extracts, juices, and powders from red or orange-coloured fruits, vegetables and roots. Examples include beet, bell pepper, pomegranate, mandarin, carrot, barley malt and combinations thereof.

In yet another preferred embodiment, the meat analogue comprises 0.01-5 wt.% of NaCl, more preferably 0.05-3 wt.% of NaCl, yet more preferably 0.1-2 wt.% of NaCl, even preferably 0.3-1.7 wt.% NaCl, still more preferably 0.5-1.7wt.% NaCl, most preferably 1.1-1.5wt.% NaCl by weight of the meat analogue. In addition, part of the NaCl may be replaced by KCI or any other salt substitute suitable for consumption.

A second aspect of the invention relates to a method for preparing the meat analogue as described herein above, said method comprising the steps of:
i. providing an aqueous dispersion comprising a source of cellulose microfibrils;
ii. producing a binder by treating the aqueous dispersion with high shear to produce an aqueous dispersion comprising cellulose microfibrils with a composition homogeneity parameter (CHP) of at least 0.05 and by adding thermally gelling non-animal protein to the aqueous dispersion before, during and/or after the high shear treatment; and
iii. combining the binder with texturised non-animal protein pieces to produce a meat analogue dough; and
iv. shaping the meat analogue dough to produce the meat analogue.

Preferably, the embodiments described herein above with regard to the meat analogue apply to the method of preparing the meat analogue as well.

Said aqueous dispersion undergoes a high-shear treatment to produce an ultra-fine dispersion of cellulose microfibrils. The CHP of the produced binder is preferably at least 0.06. Even more preferably, the CHP of the produced binder is 0.07-0.30. Most preferably, the CHP of the binder is 0.08-0.15.

Preferably the high shear treatment includes one or more steps of high-pressure homogenisation at a pressure between 200-4000 bar. More preferably, the high-shear treatment includes one or more steps of high-pressure homogenisation at a pressure between 300-3000 bar, more preferably between 400-2000 bar, most preferably between 500-1500 bar.

In a preferred embodiment, the high-pressure homogenisation is microfluidization and includes one or more steps of microfluidization at a pressure between 300-4000 bar, more preferably between 500-3000 bar, most preferably between 700-2000 bar.

In an alternative preferred embodiment, other physical methods known in the art for defibrillation or/and dispersing of cellulose such as sonication, milling, grinding, steam explosion, refining, or combinations of these can also be used to produce an aqueous dispersion comprising cellulose microfibrils (e.g. Osong, S.H., Norgren, S. & Engstrand, P. Processing of wood-based microfibrillated cellulose and nanofibrillated cellulose, and applications relating to papermaking: a review. Cellulose 23, 93-123 (2016). https://doi.org/10.1007/s10570-015-0798-5).

Preferably, the aqueous dispersion comprises 0.2-12 wt.% of a source of cellulose microfibrils, more preferably 0.4-10 wt.%, most preferably 0.6-8 wt.% of a source of cellulose microfibrils.

The thermally gelling non-animal protein is preferably added at least partially to the aqueous dispersion before the high-shear treatment in step ii.

Preferably, the texturised non-animal protein pieces are hydrated texturised non-animal protein pieces.

Preferably, optionally one or more further ingredients are added during any one of steps i-iii. Examples of optional further ingredients include polysaccharides, non-animal fat, fat tissue mimetics, emulsifiers, acidulants, preservatives, colouring, flavouring, vitamins and minerals.

In the present method, the meat analogue dough can be shaped in many different forms, for example by using moulds, casings, extrusion, stamping and 3D food printing devices.

The meat analogue of the present invention may be provided in different shapes. Examples of meat analogues encompassed by the present invention include patties, balls, chunks, minced meat and sausages.

The following non-limiting examples further illustrate the invention.

### Examples

### Measurement methods

### Linear elastic compression modulus (Young's modulus)

Meat analogue or binder compositions were analysed using the TA.XTplus Texture Analyser (Stable Micro Systems, UK) using flat cylindrical probes with a diameter of either 6cm or 1.27cm and compressed to a strain of 50% or 80% using a trigger force of 2-10 g and test speed of 1-5 mm/sec. The force F during compression and strain ε were measured automatically once the trigger force is achieved. The deformed surface area A and stress σ were determined based on contact area set by the diameter of the gel or the probe according to A = πd²/4 and σ = F/A. Force-displacement curves were converted into stress-strain curves.

Stress-strain curves were analysed to determine the linear young's modulus E = σ/ε. The data for strain ε (x-axis) and stress σ (y-axis) were plotted in a suitable programming and numeric computing environment. The data was fitted to a smoothing spline to allow resampling of the strain-stress data. The resampling spacing length is 1000. A Savitzky-Golay technique is applied for smoothing and differentiating the data by least-square regression analysis. The Savitzky-Golay uses a 2^{nd} order polynomial and ∼61 sample frames. This enables the identification of the linear limit by pinpointing inflexion points given by estimates of the first and second derivatives. Using the derivatives estimates, the first point is detected where the second derivative is close to zero. From that point, a window of 500 points is created where other instances where the second derivative is close to zero are found. The linear Young's modulus E = σ/ε is calculated from the mean of all those instances and with a tolerance variation of 0.003. Goodness of fit is deemed adequate for R² above 0.99. When lower goodness of fit is observed, R² < 0.99, due to the non-linearity of uneven specimen surfaces, the non-linear part is gradually excluded until the goodness of fit improves to R² ≥ 0.99.

### Composition Homogeneity Parameter (CHP)

The CHP provides a measure for the extent to which the CMFs have been homogenously dispersed in the composition. The CHP is measured with a method based on confocal scanning laser microscopy (CSLM) and performed on a standardised sample comprising the CMFs. The protocol to establish the CHP includes three parts: (A) standardised sample preparation, (B) CSLM microscopy to obtain micrographs of the standardised sample, and (C) digital image analysis to calculate the CHP value.

### (A) Standardised sample preparation

Meat analogue or binder compositions were brought to room temperature (20°C) by holding for 1 hour. Subsequently, a sample from the composition is diluted with water to obtain a 200 g dispersion with 0.10 wt.% cellulose by weight of the dispersion, in a 500 ml plastic beaker with an inner diameter of 80 mm. Samples were then mixed in overhead stirred (with impeller geometry) at 2000rpm for 5 min; and filtered with a 125 µm sieve. Then, the mixture was stirred using a Silverson L5M-A overhead mixer (small screen, 1 mm holes) at 5000 rpm for 5 minutes. This mixing step ensures the cellulose microfibrils are evenly distributed over the diluted sample volume.

Optionally, potential large protein particles, e.g. textured vegetable protein particles, are further removed by additional centrifugation and/or protein hydrolysis steps. The centrifugation step consists in placing 20 mL of slurry into 50 mL centrifugation tubes, and subjected to 250rpm for 3 min. The supernatant is then collected from the middle of the tube. The protein hydrolysis steps consist in preparing a solution of 9 mg of pepsin from porcine gastric mucosa (Sigma Aldrich) per 1 mL 0.01 M HCl is prepared. Then, 1 mL of the pepsin in HCl solution is added to 17 mL of microfibril dispersion to reach a final cellulose concentration of 0.10 wt.%. The pH is then adjusted to 1.8-2 by dropwise addition of 1 M HCl, and the dispersion is shaken gently and allowed to hydrolyse for 2h in a water bath at 37 °C.

Then, 3 mL of the mixed sample was transferred to a glass vial with a plastic Pasteur pipette, to which 25 µL of 0.5 % w/v Congo Red aqueous solution was added to dye the standardised sample. To ensure even dye distribution throughout the sample, it may, for instance, be gently shaken. Then, 600 µmL of the sample is pipetted with a 1 mL tip onto a glass coverslip (High precision No. 1.5H, 2.4 cm width, 5 cm length, 170 ± 5 µm thickness) to which a cover well imaging chamber (2 cm diameter X 0.25 cm thickness) has been glued previously.

### (B) CSLM microscopy to obtain micrographs of the standardised sample

The dyed standardised samples were imaged with a Zeiss LSM 880 confocal scanning laser microscope equipped with a diode-pumped solid-state laser line emitting at a wavelength of 561 nm and operated at excitation wavelengths: 570-687 nm, fixed laser power, using a 10x objective with a numerical aperture of 0.45 and working distance 5.2 mm, and thereby recording at least 25 independent micrographs at a resolution of 1024×1024 pixels where each pixel represents a sample size of within the range of 1490 by 1490 nm to 1540 by 1540 nm, taking each image at a depth penetration between 50-70 µm, adjusting the laser intensity and gain settings such that in every image between 0.1 and 2% of the pixels are saturated and recording the micrographs at a colour depth of at least 8 bits per pixel. Comparisons of CHP values across samples were made in images having similar % of saturated pixels (0.5 - 2%) and undersaturated pixels (> 0.01%).

Micrographs should be recorded whilst avoiding imaging air bubbles, sample edges or areas where the source of cellulose microfibrils is locally concentrated. Likewise, care should be taken to avoid imaging other objects of macroscopic dimensions that do not originate from the cellulose microfibrils. This may be conveniently accomplished, for instance, by removing such objects of macroscopic dimensions during sample preparation by sieving, centrifuging or by protein hydrolysis.

Typically, one or more photomultiplier tubes are used as the light detectors in the microscope. Preferably the microscope is equipped with three photomultiplier tubes (PMTs). Independent micrographs are micrographs that are non-overlapping, both in the x-y plane and in the z-direction. The micrographs may suitably be recorded at a colour depth higher than 12 bits (for instance at 24-bit RGB), since this can easily be converted to a lower colour depth by well-known means (e.g. using well-known image analysis software including for instance imaged.).

### (C) Digital image analysis

The digital image analysis part of the protocol involves the following steps:
a. Ensuring that the micrographs are present as or converted to a format with a single intensity value for each pixel;
b. Normalising each individual micrograph by recalculating the pixel values of the image so that the range of pixel values used in the image is equal to the maximum range for the given colour depth, thereby requiring 0.4% of the pixels to become saturated;
c. Obtaining for each individual micrograph the image histogram and, if necessary, removing discrete, single point spikes from each histogram by visual inspection and exclude them from the analysis (e.g. using MATLAB);
d. For each individual image histogram determining the full width at half maximum (FWHM), by first determining the maximum count in the histogram and the channel containing this maximum count (the maximum channel), then counting the number N of channels between the first channel containing a value equal or higher than half the maximum and the last channel containing a value equal or higher than half the maximum thereby including this first and last channel in the count N, and then calculating the FWHM by dividing the count N by the total number of channels;
e. Calculating the composition homogeneity parameter CHP, wherein CHP is the average of the FWHM values obtained for the individual micrographs.

The digital image analysis steps may suitably be carried out using well-known image analysis software including for instance imaged. The result of step (a) should be that the image is of a format wherein the intensity for each pixel is expressed as a single value. This is for instance the case if the image is a "grey scale" image. In contrast, images in RGB format or a related format having three intensity values per pixel should be converted. This is easily achieved by well-known operations in the field of digital image analysis. An example of a suitable output format would be a grey-scale image with 8 bits per pixel.

The normalising operation of step (b) is generally known as a histogram stretch operation or a contrast stretch operation. The normalisation is performed by allowing a small percentage of pixels in the image to become saturated. Here saturation includes both the minimum and maximum value for the given colour depth. In an 8-bit greyscale image, the minimum value would be 0 and typically displayed as black, whilst the maximum value would be 255 and typically displayed as white.

The image histogram of step c. is a well-known property for digital images, representing the distribution of the pixels over the possible intensities, by providing the pixel count for each intensity channel. For the purpose of the spike-removal of step c., the value for a particular channel is considered a spike if it is considerably higher than the values of the adjacent channels, typically at least a factor of 1.5 higher.

The lower half-maximum channel in step (d) corresponds to the channel containing a count of half the maximum count that is furthest away from the maximum channel on the low-intensity side of the maximum channel. Analogously, the upper half-maximum channel corresponds to the channel containing a count of half the maximum count that is furthest away from the maximum channel on the high-intensity side of the maximum channel. The FWHM that is obtained in step (d) will be a value between 0 and 1.

### Example 1

Binder compositions 1, 2 and A were prepared based on the recipe shown in Table .

**Table 1**

| **Ingredient** | **Wt.%** |
|---|---|
| Soy protein isolate (Supro EX37, ex Solae) ¹ | 12 |
| Citrus fibre (Herbacel AQ+, ex Herbafood) | 2 |
| comprising 80-90 wt.% cellulose | |
| Water | 86 |

| | |
|---|---|
| ¹ Thermally gelling protein isolate | |

Binder compositions 1-2 were prepared by mixing citrus fibre with water, followed by dispersion using an L5M-A (Silverson) mixer for 15 minutes at 3000 rpm. Subsequently the soy protein isolate was added, followed by dispersion using an L5M-A (Silverson) mixer for 30 minutes at 5500 rpm to form the mix for Composition 1. The resulting mixture was further homogenised using a high-pressure homogeniser (Microfluidizer M 110S, 87 µm G-10Z-chamber) operating at 1000 bar to form the mix for Composition 2.

Composition A was prepared by adding the soy protein isolate and citrus fibre to water and stirring in a low-shear mixer (Kenwood mixer) for 5 minutes at a minimal speed level.

Binder compositions B and C were prepared on the basis of the recipes shown in Table 2.

**Table 2**

| **Ingredient (wt.%)** | **Binder B** | **Binder C** |
|---|---|---|
| Soy protein isolate (Supro XT 219, ex Solae) ² | 2 | 12 |
| Citrus fibre (Nutrava, ex CP Kelco) | 0.6 | 2 |
| comprising ∼40 wt.% cellulose | | |
| Water | 97.4 | 86 |

| | | |
|---|---|---|
| ² Non-thermally gelling hydrolysed protein isolate | | |

Compositions B and C were prepared by mixing citrus fibre with water, followed by dispersion using an L5M-A (Silverson) mixer for 2.5 minutes at 7000 rpm. The dispersions were then homogenised using 3 passes at 207 bar with a high-pressure homogeniser (Niro Soavi, GEA). Subsequently the non-thermally gelling soy protein isolate was added to the homogenised cellulose microfibrils, which were mixed for 5 minutes in a Kenwood mixer at a minimal speed level.

Each binder's composition homogeneity parameter (CHP) was determined after its preparation. The results are presented in Table 1.

**Table 1**

| | **Binder** | | | | |
|---|---|---|---|---|---|
| | **1** | **2** | **A** | **B** | **C** |
| CHP | 0.120 ± 0.005 | 0.246 ± 0.020 | 0.024 ± 0.007 | 0.071 ± 0.008 | 0.078 ± 0.009 |

### Example 2

Burger compositions (1-2, A-C) were prepared using the binder compositions from Example 1 and based on the recipe shown in Table 2.

**Table 2**

| | **Burger** | | | | |
|---|---|---|---|---|---|
| **Ingredient (wt.%)** | **1** | **2** | **A** | **B** | **C** |
| Binder composition 1 | 48.7 | - | - | - | - |
| Binder composition 2 | - | 48.7 | - | - | - |
| Binder composition A | - | - | 48.7 | - | - |
| Binder composition B | - | - | - | 48.7 | - |
| Binder composition C | - | - | - | - | 48.7 |
| Soy-based TVP | 20 | 20 | 20 | 20 | 20 |
| Water | 30 | 30 | 30 | 30 | 30 |
| Other ingredients | 1.3 | 1.3 | 1.3 | 1.3 | 1.3 |

The burger compositions were prepared by hydrating soy-based texturised vegetable protein (TVP) under vacuum 0.9 bar in a sealed plastic foil bag. Binder compositions were prepared as described in Example 1 and were mixed with the hydrated TVP using a Kenwood mixer for 1 minute. The resulting mixture was then mixed with added food flavouring for 30 seconds, followed by mixing with non-animal fat for 30 seconds, resulting in a meat analogue dough.

The meat analogue dough was moulded using a patty shaper and then frozen overnight to a temperature of -20 °C. The next day, the burger compositions were cooked in an oven at 300 °C using dry heat for 5 minutes.

The burger compositions were compared on the CHP of the raw burger and the cooked burger, the elastic modulus of the cooked burger and the acceptance of sensory/texture properties of the raw burgers. The results are shown in Table 3.

**Table 3**

| | **Burger** | | | | |
|---|---|---|---|---|---|
| | **1** | **2** | **A** | **B** | **C** |
| CHP (raw burger) | 0.090 ± 0.032 | 0.135 ± 0.019 | 0.012 ± 0.002 | 0.145 ± 0.006 | 0.125 ± 0.009 |
| CHP (cooked burger) | 0.056 ± 0.007 | 0.106 ± 0.006 | 0.034 ± 0.004 | 0.153 ± 0.007 | 0.100 ± 0.014 |
| Elastic modulus of cooked burger (kPa) | 160.0 ± 16.2 | 174.6 ± 16.0 | 116.0 ± 8.16 | ND* | 48.6 ± 3.2 |
| Sensory/Texture acceptance of raw burger | + | + | - | - | - |

| | | | | | |
|---|---|---|---|---|---|
| * ND: not detectable "-" = Unsatisfactory "+" = Satisfactory | | | | | |

Burger compositions made with a binder with a CHP value according to the invention (Compositions 1 and 2) have significantly higher elastic modulus compared to a burger composition with the same composition, but with a less homogeneous distribution of the cellulose microfibrils within the binder (Composition A).

Burger compositions with a binder that is made with a non-thermally gelling non-animal protein (Composition B and C) have poor performance as a binder in the burger (i.e. low elasticity).

The quality of the burger compositions A-C was therefore deemed unacceptable.

All used ingredients in the above examples are produced in Europe.

## Claims

1. A meat analogue comprising:
(a) 25-75 wt.% by weight of the meat analogue of hydrated texturised non-animal protein pieces;
(b) 20-70 wt.% by weight of the meat analogue of a binder, said binder comprising by weight of the binder:
(b1) 3-35 wt.% of thermally gelling non-animal protein;
(b2) 0.1-6 wt.% of cellulose microfibrils;
(b3) 0-20 wt.% of polysaccharide; and
(b4) 20-95 wt.% water;
wherein component (b1), (b2), (b3) and (b4) of the binder together constitute at least 60 wt.% of the binder and wherein the binder has a composition homogeneity parameter (CHP) of at least 0.05,
wherein components (a) and (b) together constitute at least 75 wt.% of the meat analogue.

2. The meat analogue according to claim 1, wherein the hydrated texturised non-animal protein pieces comprise by weight of the pieces:
(a1) 40-90 wt.% water;
(a2) 10-60 wt.% non-animal protein.

3. The meat analogue according to claim 1 or 2, wherein the non-animal protein in the texturised non-animal protein pieces is selected from legume protein, cereal protein, tuber protein, oil seed protein, and combinations thereof.

4. The meat analogue according to any one of the preceding claims, wherein the binder comprises a weight ratio of cellulose microfibrils to thermally gelling non-animal protein from 1:100-2:1.

5. The meat analogue according to any one of the preceding claims, wherein the CHP of the binder is at least 0.06.

6. The meat analogue according to any one of the preceding claims, wherein the binder comprises by weight of the binder 4.5-30 wt.% thermally gelling non-animal protein.

7. The meat analogue according to any one of the preceding claims, wherein the thermally gelling non-animal protein is selected from legume protein, oil seed protein, potato protein or combinations thereof.

8. The meat analogue according to any one of the preceding claims, wherein the binder comprises by weight of the binder 0.2-5 wt.% cellulose microfibrils.

9. The meat analogue according to any one of the preceding claims, wherein the cellulose microfibrils have an average degree of crystallinity of less than 50%.

10. The meat analogue according to any one of the preceding claims, wherein the cellulose microfibrils are provided by sources of citrus fruit, tomato, apple, sugar beet or combination thereof.

11. The meat analogue according to any one of the preceding claims, wherein the meat analogue comprises non-animal fat in an amount of 0-30 wt.% by the weight of the meat analogue.

12. The meat analogue according to any one of the preceding claims, where the meat analogue is a vegetarian meat analogue, preferably a vegan meat analogue.

13. A method for preparing the meat analogue according to any one of claims 1-12, comprising the steps of:
i. providing an aqueous dispersion comprising a source of cellulose microfibrils;
ii. producing a binder by treating the aqueous dispersion with high shear to produce an aqueous dispersion comprising cellulose microfibrils with a composition homogeneity parameter (CHP) of at least 0.05 and by adding thermally gelling non-animal protein to the aqueous dispersion before, during and/or after the high shear treatment; and
iii. combining the binder with texturised non-animal protein pieces to produce a meat analogue dough; and
iv. shaping the meat analogue dough to produce the meat analogue.

14. The method according to claim 13, wherein the high shear treatment includes one or more steps of high-pressure homogenisation at a pressure between 200-4000 bar.

15. The method according to claim 13 or 14, wherein the thermally gelling non-animal protein is added at least partially to the aqueous dispersion before the high-shear treatment in step ii.
